# EUROPÄISCHE PATENTSCHRIFT

(11) **EP 2 419 947 B1**
(45) Veröffentlichungstag und Bekanntmachung des Hinweises auf die Patenterteilung: **30.09.2020**
(21) Anmeldenummer: 10715495.7
(22) Anmeldetag: 29.03.2010
(51) Int. Cl.: H01M 2/16

(54) **UNSYMMETRISCHER SEPARATOR**
ASYMMETRICAL SEPARATOR
SÉPARATEUR ASYMÉTRIQUE

(30) Priorität: 17.04.2009 DE 102009017542
(43) Veröffentlichungstag der Anmeldung: 22.02.2012
(73) Patentinhaber: Carl Freudenberg KG, 69469 Weinheim (DE)
(72) Erfinder: WEBER, Christoph, 69514 Laudenbach (DE); ROTH, Michael Dr., 55131 Mainz (DE)
(86) Internationale Anmeldenummer: PCT/EP2010/001979
(87) Internationale Veröffentlichungsnummer: WO 2010/118822

(56) Entgegenhaltungen:
- WO-A1-02/061874
- WO-A1-2008/143005
- DE-A1-102005 042 215

## Beschreibung

### Technisches Gebiet

Die Erfindung betrifft einen Separator zur Anordnung in einer Batterie, umfassend einen Grundkörper, wobei der Grundkörper eine Anodenseite zur Kontaktierung der Anode einer Batterie und eine Kathodenseite zur Kontaktierung der Kathode einer Batterie aufweist.

### Stand der Technik

Separatoren der eingangs genannten Art sind bereits aus der WO 2009/033 514 A1 und der WO 2009/033 627 A1 bekannt. Dort sind Vliesstoffe mit Partikelfüllung beschrieben, die als Separatoren in Batterien und Energiespeichern verwendet werden.

Im Zuge der Verknappung natürlicher Ressourcen und der damit einhergehenden Kostensteigerungen für Energie werden Energiespeicher - insbesondere elektrische Energiespeicher - zunehmend wichtiger für moderne Industriegesellschaften.

Als Energiespeicher werden überwiegend Kondensatoren und Batterien verwendet. Als besonders vielversprechend gelten derzeit Lithium-Ionen-Batterien. Diese Batterien werden heute schon für mobile Anwendungen, wie z.B. in Mobiltelefonen, Camcordern etc., verwendet.

Bei der Übertragung dieser Technologie auf großvolumige Batterien, die für die Speicherung großer Mengen elektrischer Energie benötigt werden, treten allerdings Scale-Up-Probleme auf. Ein wesentliches Problem dabei ist die Erwärmung bzw. Überhitzung einer Batterie. In großen Batterien kann die bei Lade- bzw. Entladevorgängen entstehende Wärme relativ schlecht abgegeben werden, so dass die einzelnen Komponenten der Batteie einer hohen thermischen Belastung ausgesetzt werden, die für die Batterie lebensdauerverkürzend wirkt. Daher werden erhöhte Anforderungen an die Sicherheit, Stabilität und Lebensdauer der einzelnen Komponenten einer Batterie gestellt, um einen internen Kurzschluss zu vermeiden und eine Explosion der Batterie zu verhindern.

Um eine ökonomische Nutzung von Lithium-Ionen-Batterien zu gewährleisten, muss neben einer Vergrößerung der Batterien auch deren Energie- bzw. Leistungsdichte weiter erhöht werden. Um diese Anforderungen zu erfüllen, werden neue Elektrodenmaterialien, sowohl für die Anode als auch für die Kathode, entwickelt.

Bei der Kathode werden Hochspannungskathodenmaterialien verwendet, die eine höhere Zellspannung in der Batterie und damit auch eine höhere Kapazität ermöglichen. Die Hochspannungskathodenmaterialien sind, insbesondere im geladenen Zustand einer Batterie, stark oxidierende Materialien, die gänzlich neue Anforderungen an die verwendeten Komponenten in einer Batterie stellen. Auf der Anodenseite steht der Separator in direktem Kontakt mit stark reduzierenden Elektrodenmaterialien.

Hieraus erwachsen neue Anforderungen an den Elektrolyten und auch an den Separator, der in direktem physikalischen Kontakt zu den Elektroden steht.

Die WO 2008/143005 und US 2009/0325058 A1 betreffen elektrochemische Vorrichtungen mit einer positiven Elektrode, einer negativen Elektrode, einem nicht wässrigen Elektrolyten und einem Separator. Der Separator umfasst eine erste poröse Schicht, die hauptsächlich aus einem thermoplastischen Harz besteht, und eine zweite poröse Schicht, die hauptsächlich aus isolierenden Partikeln besteht.

Die DE 10 2005 042 215 A1 betrifft einen Separator, umfassend elektrisch nicht leitende Fasern und eine nicht elektrisch leitfähige Beschichtung aus einem anorganischen Kleber und mit dem Substrat verklebten Oxidpartikeln.

Die WO 02/061874 A1 betrifft mehrschichtige UV-gehärtete Polymerelektrolyte, die Separator-Filmschichten und Elektrolytschichten aufweisen.

### Darstellung der Erfindung

Der Erfindung liegt daher die Aufgabe zugrunde, einen Separator anzugeben, der problemlos in Lithium-Ionen-Batterien einsetzbar ist und die Beriebssicherheit der Lithium-Ionen-Batterie erhöht.

Erfindungsgemäß wird die voranstehende Aufgabe durch einen Separator mit den Merkmalen des Patentanspruchs 1 gelöst. Danach ist der eingangs genannte Separator dadurch gekennzeichnet, dass die Anodenseite eine andere Materialkonsistenz aufweist als die Kathodenseite.

Erfindungsgemäß ist zunächst erkannt worden, dass ein Separator benötigt wird, der problemlos mit unterschiedlichen Elektrodenmaterialien in Kontakt treten kann. Weiter ist erkannt worden, dass eine unterschiedliche Materialkonsistenz des Separators auf der Anodenseite und der Kathodenseite erlaubt, den Separator an die Elektrodenmaterialien anzupassen. Dabei ist nicht nur denkbar, auf der Anodenseite eine andere Porosität als auf der Kathodenseite auszubilden, sondern sogar völlig andere Materialien oder Materialmischungen anzuordnen. Erfindungsgemäß erlaubt dieser Separator, den neuen Anforderungen für große High Energy bzw. High Power Batterien gerecht zu werden. Ganz im Gegensatz zu den bereits bekannten Polyolefinseparatoren, die aus einheitlichen Materialien (Polytehylen oder Polypropylen) mit einer relativ zum Querschnitt isotropen Porenstruktur bestehen, ist der erfindungsgemäße Separator unsymmetrisch aufgebaut. Er kann daher an die jeweils unterschiedlichen Anforderungen an die chemische bzw. elektrochemische Stabilität an der jeweiligen Elektrodenseite angepasst werden Hierdurch wird ein sicherer Betrieb einer Batterie gewährleistet.

Folglich ist die eingangs genannte Aufgabe gelöst.

Die unterschiedliche Materialbeschaffenheit des Separators auf der Anodenseite und der Kathodenseite könnte auch durch eine Oberflächenbehandlung, z.B. reaktives oder aktivierendes Plasma, CoronaBehandlung oder Fluorierung, bewirkt werden. Hierdurch kann insbesondere die Haftung an die Elektroden verbessert, eine Schutzschicht gegen elektrochemische Korrosion gebildet oder die Benetzungseigenschaften durch den Elektrolyten verbessert werden.

Erfindungsgemäß besteht die Anodenseite aus einem ersten Material oder einer ersten Materialmischung und die Kathodenseite aus einem zweiten Material oder einer zweiten Materialmischung.

Die jeweiligen Materialien oder Materialmischungen können an die chemischen oder physikalischen Bedingungen an der jeweiligen Elektrodenseite angepasst sein. Auf der Anodenseite und/ oder der Kathodenseite könnte eine feinporöse Sperrschicht ausgebildet sein. Hierdurch kann ein Dendritenwachstum verhindert werden. Das Dendritenwachstum beginnt üblicherweise an der Anode und setzt sich von dort zur Kathode fort. Es lässt sich durch eine sehr feinporöse Sperrschicht effektiv vermindern. Dabei ist auch denkbar, dass anodenseitig sehr feine Poren mit zur Kathodenseite zunehmendem Porendurchmesser ausgebildet sind.

Die feinporöse Sperrschicht könnte auf den Grundkörper auflaminiert sein. Hierdurch ist eine feste und relativ ablösesichere verbindung mit dem Grundkörper hergestellt. Der Laminierprozess erlaubt eine separate Fertigung des Grundkörpers und der Sperrschicht, die aus einem Material oder einer Materialmischung bestehen kann.

Erfindungsgemäß weist das erste Material oder die erste Materialmischung und/oder das zweite Material oder die zweite Materialmischung Füllstoffe auf. Die Füllstoffe erlauben eine Einstellung der Porosität der feinporösen Sperrschicht. Dabei ist denkbar als Füllstoffe Pulpmaterial, Fasern oder Partikel zu verwenden. Diese Füllstoffe können sogar in den Grundkörper eingebracht werden, um dessen Porosität zu modifizieren.

Vor diesem Hintergrund könnte zumindest ein Teil der Füllstoffe als Partikel einer mittleren Partikelgröße von 0,2 bis 10 µm, bevorzugt von 0,5 bis 4 µm ausgebildet sein. Die Partikelgröße von 0,2 bis 10 µm erlaubt den Aufbau einer hinrichend feinporösen Schicht. Die Partikelgröße von 0,5 bis 4 µm erlaubt den Aufbau einer feinporösen Schicht, die Dendritenwachstum in Lithium-Ionen-Batterien wirksam verhindert. Hierdurch kann ein Kurzschluss oder sogar eine Explosion der Batterie vermieden werden. Die Partikel könnten rund oder gestreckt ausgebildet sein.

Erfindungsgemäß enthält zumindest ein Teil der Füllstoffe auf der Anodenseite Al₂O₃ und zumindest ein Teil der Füllstoffe auf der Kathodenseite Polyvinylidenfluorid. Überraschend halten Partikel aus Al₂O₃ den reduzierenden Anodenmaterialen und Partikel aus Polyvinylidenfluorid den oxidierenden Kathodenmaterialien stand. Al₂O₃ (Aluminiumoxid) ist reduktionsstabil und Polyvinylidenfluorid ist oxidationsstabil.

Es ist denkbar, die in den WO 2009/033 514 A1, der WO 2009/033 627 A1 und der PCT/EP2009/001197 weiter genannten Partikel zur Ausrüstung eines unsymmetrisch aufgebauten Separators zu verwenden, soweit sie reduktionstabil oder oxidationsstabil sind.

Zumindest ein Teil der Füllstoffe könnte als quellfähige und im Elektrolyten gelbildende Substanzen ausgebildet sein. Durch das Aufquellen oder die Gelbildung können unerwünschte Löcher im Separator geschlossen werden und kann dessen Porosität bei Kontakt mit dem Elektrolyten noch stärker verfeinert werden.

Die hier genannten Füllstoffe, insbesondere die Partikel, könnten durch Bindemittel gebunden sein, wie sie in den WO 2009/033 514 A1, der WO 2009/033 627 A1 und der PCT/EP2009/001197 genannt sind.

Erfindungsgemäß besteht der Grundkörper aus einem Vliesstoff. Eine Lage aus Vliesstoff lässt sich problemlos anodenseitig oder kathodenseitig mit unterschiedlichen Materialien ausrüsten. Die aus dem Stand der Technik bekannten Polyolefinseparatoren zeigen signifikante Nachteile hinsichtlich der thermischen Stabilität. Hierbei sind der hohe Schrumpf und das Aufschmelzen und ein Zerfliessen bei erhöhten Temperaturen und Druck zu nennen. Ein Vliesstoff zeigt hier überraschend eine besseres Verhalten, obwohl auch der Vliesstoff Fasern aus Polyoelfinen umfassen kann.

Besonders bevorzugt könnte der Vliesstoff als Nassvliesstoff ausgestaltet sein, welcher thermisch verfestigt und/oder durch ein Bindemittel fixiert ist. Ein solcher Vliesstoff lässt sich besonders gut mit einer feinporösen Sperrschicht ausbilden.

Der Vliesstoff könnte aus Fasern gefertigt sein, deren mittlerer Durchmesser höchstens 5 µm beträgt. Hierdurch ist eine sehr feine Porenstruktur geschaffen.

Der Schmelzpunkt des Vliesstoffs könnte größer als 100° C sein. Bevorzugt könnte der Schmelzpunkt des Vliesstoffs größer als 140° C sein. Besonders bevorzugt könnte die Schmelztemperatur im Elektrolyten größer als 200° C sein. Ein solcher Vliesstoff eignet sich besonders für die verwendung in einer Lithium-Ionen Batterie.

Der Separator könnte einen Schrumpf von höchstens 5 % bei einer Temperatur von 150° C aufweisen. Ein Separator mit einem solchen Schrumpfverhalten kann auch in Batterien eingesetzt werden, die hohe Betriebstemperaturen zeigen.

Der Separator könnte eine mittlere Porengröße (mittlerer Porendurchmesser) von 0,1 bis 4 µm, bevorzugt von 0,1 bis 1 µm aufweisen. Bei einer Porengröße von 0,1 bis 4 µm, die insbesondere anodenseitig vorliegt, ist eine hohe Lithium-Ionen-Konzentration und dadurch eine schnelle Aufladung der Batterie möglich. Bei einer anodenseitigen Porengröße von 0,1 bis 1 µm ist eine besonders schnelle Aufladung der Batterie bei überraschend geringem Dendritenwachstum möglich.

Der Separator könnte eine Dicke von höchstens 40 µm, bevorzugt höchstens 30 µm, aufweisen. Das Beschichten einer Elektrode bzw. eines Separators erhöht zwar die Sicherheit einer Batterie, bewirkt jedoch nachteilig, dass sie die Dicke des gesamten Separators erhöht wird. Dies wirkt einer höheren Energie- und Leistungsdichte von Batterien entgegen. Überraschend hat sich gezeigt, dass ein Separator von höchstens 40 µm einerseits eine ausreichende Sicherheit und andererseits eine hohe Energie- und Leistungsdichte einer Lithium-Ionen Batterie bewirkt.

Es gibt nun verschiedene Möglichkeiten, die Lehre der vorliegenden Erfindung auf vorteilhafte Weise auszugestalten und weiterzubilden. Dazu ist einerseits auf die nachgeordneten Ansprüche, andererseits auf die nachfolgende Erläuterung bevorzugter Ausführungsbeispiele der Erfindung anhand der Zeichnung zu verweisen.

In Verbindung mit der Erläuterung der bevorzugten Ausführungsbeispiele der Erfindung anhand der Zeichnung werden auch im Allgemeinen bevorzugte Ausgestaltungen und Weiterbildungen der Lehre erläutert.

### Kurzbeschreibung der Zeichnung

In der Zeichung zeigen
- Fig. 1: eine schematische Ansicht eines Separators mit einem Grundkörper aus Vliesstoff, der einseitig oberflächlich beschichtet ist,
- Fig. 2: eine schematische Ansicht eines Separators mit einem Grundkörper aus Vliesstoff, der beidseitig beschichtet ist und ,
- Fig. 3: eine schematische Ansicht eines Separators mit einem Grundkörper aus Vliesstoff, der beidseitig beschichtet ist, wobei die Materialmischungen zumindest teilweise in das Innere des Grundkörpers eindringen.

### Ausführung der Erfindung

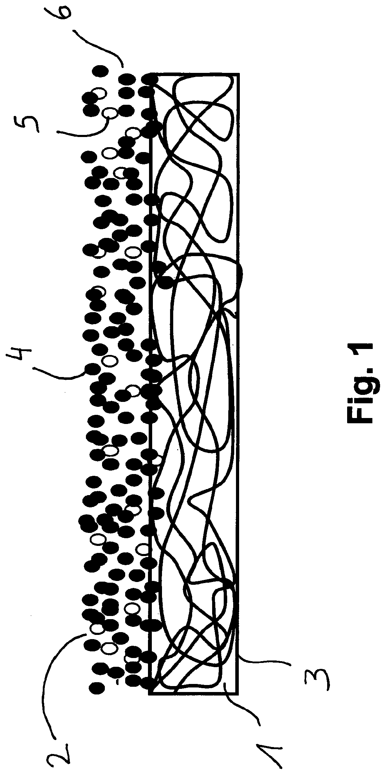

Fig. 1 zeigt einen Separator zur Anordnung in einer Batterie, umfassend einen Grundkörper 1, wobei der Grundkörper 1 eine Anodenseite 2 zur unmittelbaren Kontaktierung der Anode einer Batterie und eine Kathodenseite 3 zur unmittelbaren Kontaktierung der Kathode einer Batterie aufweist. Die Anodenseite 2 weist eine andere Materialkonsistenz auf als die Kathodenseite 3. Der Grundkörper 1 ist als Vliesstoff ausgebildet und anodenseitig mit einer Materialmischung aus inerten, temperaturstabilen Partikeln 4 und Binderpartikeln 5 beschichtet. Die Anodenseite 2 besteht daher aus einer ersten Materialmischung und die Kathodenseite 3 besteht aus einem zweiten Material oder einer zweiten Materialmischung, die hier als Vliesstoff ausgebildet ist. Auf der Anodenseite 2 ist eine feinporöse Sperrschicht 6 ausgebildet.

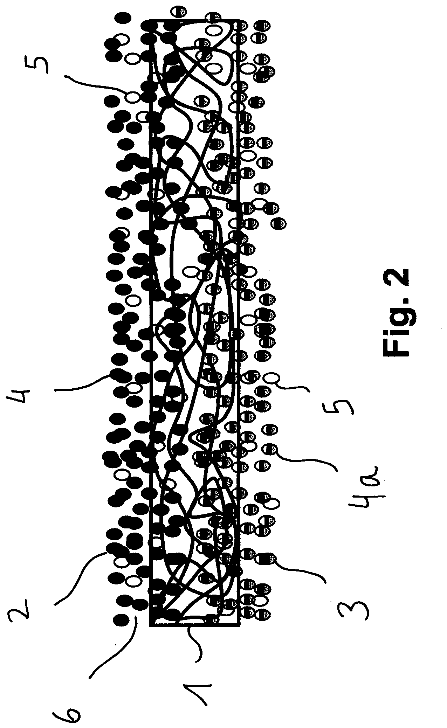

Fig. 2 zeigt einen Separator zur Anordnung in einer Batterie, umfassend einen Grundkörper 1, wobei der Grundkörper 1 eine Anodenseite 2 zur unmittelbaren Kontaktierung der Anode einer Batterie und eine Kathodenseite 3 zur unmittelbaren Kontaktierung der Kathode einer Batterie aufweist. Die Anodenseite 2 weist eine andere Materialkonsistenz auf als die Kathodenseite 3. Der Grundkörper 1 ist als Vliesstoff ausgebildet und anodenseitig mit einer ersten Materialmischung aus inerten, temperaturstabilen Partikeln 4 und Binderpartikeln 5 beschichtet. Der Grundkörper 1 ist kathodenseitig mit einer zweiten Materialmischung aus inerten, temperaturstabilen Partikeln 4a und Binderpartikeln 5 beschichtet. Die Anodenseite 2 besteht daher aus einer ersten Materialmischung und die Kathodenseite 3 besteht aus einer zweiten Materialmischung. Auf der Anodenseite 2 ist eine feinporöse Sperrschicht 6 ausgebildet. Die erste und die zweite Materialmischung sind in das Innere des Grundkörpers 1 eingedrungen.

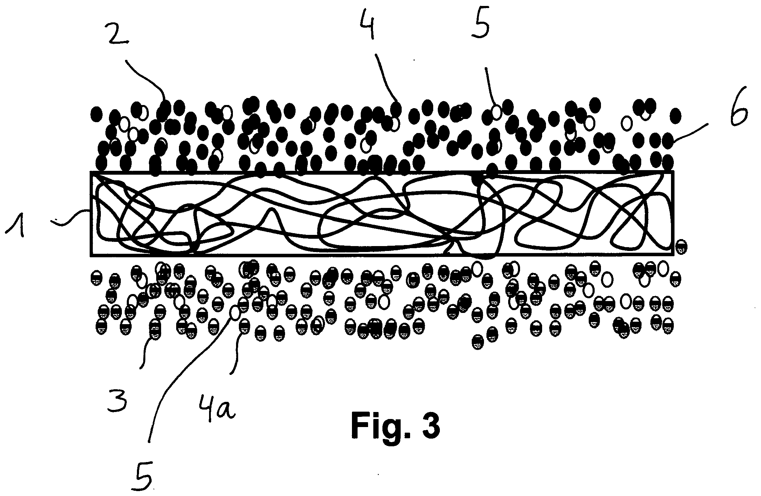

Fig. 3 zeigt einen Separator zur Anordnung in einer Batterie, umfassend einen Grundkörper 1, wobei der Grundkörper 1 eine Anodenseite 2 zur unmittelbaren Kontaktierung der Anode einer Batterie und eine Kathodenseite 3 zur unmittelbaren Kontaktierung der Kathode einer Batterie aufweist. Die Anodenseite 2 weist eine andere Materialkonsistenz auf als die Kathodenseite 3. Der Grundkörper 1 ist als Vliesstoff ausgebildet und anodenseitig mit einer ersten Materialmischung aus inerten, temperaturstabilen Partikeln 4 und Binderpartikeln 5 beschichtet. Der Grundkörper 1 ist kathodenseitig mit einer zweiten Materialmischung aus inerten, temperaturstabilen Partikeln 4a und Binderpartikeln 5 beschichtet. Die Anodenseite 2 besteht daher aus einer ersten Materialmischung und die Kathodenseite 3 besteht aus einer zweiten Materialmischung. Auf der Anodenseite 2 ist eine feinporöse Sperrschicht 6 ausgebildet. Die erste und die zweite Materialmischung sind nahezu nicht in das Innere des Grundkörpers 1 eingedrungen.

### Konkretes Ausführungsbeispiel:

### Herstellung einer Paste A als erste, anodenseitige Materialmischung:

Zu 180 Teilen einer 1% CMC (Carboxymethylcellulose) Lösung wurden 120 Teile einer 60% Aluminiumoxiddispersion (Al₂O₃) gegeben und für 30 Minuten gerührt. Daraufhin wurden 8 Teile einer wässrigen SBR (Styrolbutadienrubber) Dispersion (65% Feststoffanteil) unter Rühren hinzugefügt. Die Lösung wurde 1 Stunde gerührt und mindestens 24 Stunden auf Stabilität getestet. Die Viskosität der erhaltenen Lösung betrug 120 cP und der pH-Wert betrug 9,9.

### Herstellung einer Paste B als zweite, kathodenseitige Materialmischung:

Zu 170 Teilen einer 57 % PVDF (Polyvinylidenfluorid) - Dispersion wurden unter ständigem Rühren mit einem Flügelrührer 200 Teile einer 2% PVP (Polyvinylpyrrolidon) - Lösung gegeben. Die Lösung wurde 2 Stunden gerührt, entgast und mindestens 24 Stunden auf Stabilität getestet. Die Viskosität der erhaltenen Lösung betrug 140 cP und hatte einen pH-Wert von 7,1.

### Beschichtung mit Paste A:

Ein 15 cm breiter PET (Polyethylenterephthalat) - Vliesstoff (Dicke: 20µm, Flächengewicht: 11,3 g/m²) wurde mittels eines Walzenbeschichtungsverfahren mit obiger Lösung kontinuierlich beschichtet und bei 120°C getrocknet.

Es wurde ein beschichteter Vliesstoff (C) mit einem Flächengewicht von 23,6g/m² und einer Dicke von 29 µm erhalten. Die mittlere Porengröße betrug 0,22 µm.

### Beschichtung von (C) mit Paste B:

Der imprägnierte Vliesstoff (C) wurde mittels eines Walzenbeschichtungsverfahrens mit Paste B kontinuierlich beschichtet und bei 120°C getrocknet.

Es wurde ein anisotrop aufgebauter Separator (D) mit einem Flächengewicht von 32 g/m² und einer Dicke von 38 µm erhalten. Die mittlere Porengröße betrug 0,19 µm. Der Schrumpf (150°C, 10 min.) des beidseitig beschichteten Separators (D) betrug 0,5%.

### Messmethoden:

Die mittlere Porengröße wurde nach ASTME E 1294 (Prüfverfahren für die Merkmale der Porengröße von Membranfiltern unter Verwendung eines automatischen Flüssigkeits-Porositätsmessgerätes) bestimmt. Für die Bestimmung des Flächengewichtes wurden jeweils drei 100x100 mm große Proben ausgestanzt, die Proben gewogen und der Messwert mit 100 multipliziert. Die Dicken wurden mit einem Präzisions-Dickenmessgerät Modell 2000 U/ Elektrik gemessen. Die Messfläche betrug 2 cm², der Messdruck 1000 cN/cm². Für die Bestimmung des Schrumpfes wurden 100x100mm große Muster ausgestanzt und 10 Minuten bei 150°C in einem Labdryer der Fa. Mathis gelagert. Im Anschluss wurde der Schrumpf der Muster bestimmt.

Hinsichtlich weiterer vorteilhafter Ausgestaltungen und Weiterbildungen der erfindungsgemäßen Lehre wird einerseits auf den allgemeinen Teil der Beschreibung und andererseits auf die Patentansprüche verwiesen.

## Patentansprüche

1. Separator zur Anordnung in einer Batterie, umfassend einen Grundkörper (1), wobei der Grundkörper (1) eine Anodenseite (2) zur Kontaktierung der Anode einer Batterie und eine Kathodenseite (3) zur Kontaktierung der Kathode einer Batterie aufweist,
**dadurch gekennzeichnet, dass** die Anodenseite (2) eine andere Materialkonsistenz aufweist als die Kathodenseite (3),
wobei die Anodenseite (2) aus einem ersten Material oder einer ersten Materialmischung und die Kathodenseite (3) aus einem zweiten Material oder einer zweiten Materialmischung besteht, wobei das erste Material oder die erste Materialmischung und das zweite Material oder die zweite Materialmischung Füllstoffe aufweisen, wobei zumindest ein Teil der Füllstoffe auf der Anodenseite Al₂O₃ und zumindest ein Teil der Füllstoffe auf der Kathodenseite Polyvinylidenfluorid enthält, **dadurch gekennzeichnet, dass** der Grundkörper (1) aus einem Vliesstoff besteht.

2. Separator nach Anspruch 1, **dadurch gekennzeichnet, dass** auf der Anodenseite (2) und/ oder der Kathodenseite (3) eine feinporöse Sperrschicht (6) ausgebildet ist.

3. Separator nach Anspruch 2, **dadurch gekennzeichnet, dass** die feinporöse Sperrschicht (6) auf den Grundkörper auflaminiert ist.

4. Separator nach Anspruch 1, **dadurch gekennzeichnet, dass** zumindest ein Teil der Füllstoffe als Partikel (4, 4a) einer mittleren Partikelgröße von 0,2 bis 10 µm, bevorzugt von 0,5 bis 4 µm ausgebildet ist.

5. Separator nach einem der Ansprüche 1 oder 4, **dadurch gekennzeichnet, dass** zumindest ein Teil der Füllstoffe als quellfähige und im Elektrolyten gelbildende Substanzen ausgebildet ist.

6. Separator nach einem der Ansprüche 1 bis 5, **dadurch gekennzeichnet, dass** der Vliesstoff als Nassvliesstoff ausgestaltet ist, welcher thermisch verfestigt und/oder durch ein Bindemittel fixiert ist.

7. Separator nach einem der Ansprüche 1 bis 6, **dadurch gekennzeichnet, dass** der Vliesstoff aus Fasern gefertigt ist, deren mittlerer Durchmesser höchstens 5 µm beträgt.

8. Separator nach einem der Ansprüche 1 bis 7, **dadurch gekennzeichnet, dass** der Schmelzpunkt des Vliesstoffs größer als 100° C ist.

9. Separator nach einem der Ansprüche 1 bis 8, **gekennzeichnet durch** einen Schrumpf von höchstens 5 % bei einer Temperatur von 150° C.

10. Separator nach einem der Ansprüche 1 bis 9, **gekennzeichnet durch** eine mittlere Porengröße von 0,1 bis 4 µm, bevorzugt von 0,1 bis 1 µm.

11. Separator nach einem der Ansprüche 1 bis 10, **gekennzeichnet durch** eine Dicke von höchstens 40 µm, bevorzugt höchstens 30 µm.

## Claims

1. Separator for arrangement in a battery, comprising a main element (1), where the main element (1) has an anode side (2) for contacting the anode of a battery and a cathode side (3) for contacting the cathode of a battery, **characterized in that** the anode side (2) has a different material consistency than the cathode side (3), where the anode side (2) consists of a first material or a first material mixture and the cathode side (3) consists of a second material or a second material mixture, where the first material or the first material mixture and the second material or the second material mixture comprise fillers, where at least part of the fillers on the anode side contains Al₂O₃ and at least part of the fillers on the cathode side contains polyvinylidene fluoride, **characterized in that** the main element (1) consists of a nonwoven.

2. Separator according to Claim 1, **characterized in that** a fine-pored barrier layer (6) is present on the anode side (2) and/or the cathode side (3).

3. Separator according to Claim 2, **characterized in that** the fine-pored barrier layer (6) has been laminated onto the main element.

4. Separator according to Claim 1, **characterized in that** at least part of the fillers is configured as particle (4, 4a) having an average particle size of from 0.2 to 10 µm, preferably from 0.5 to 4 µm.

5. Separator according to one of Claims 1 or 4, **characterized in that** at least part of the fillers is configured as swellable substances which form a gel in the electrolyte.

6. Separator according to one of Claims 1 to 5, **characterized in that** the nonwoven is configured as wet nonwoven which has been thermally consolidated and/or fixed by means of a binder.

7. Separator according to one of Claims 1 to 6, **characterized in that** the nonwoven is made of fibres whose average diameter is not more than 5 µm.

8. Separator according to one of Claims 1 to 7, **characterized in that** the melting point of the nonwoven is greater than 100°C.

9. Separator according to one of Claims 1 to 8, **characterized by** a shrinkage of not more than 5% at a temperature of 150°C.

10. Separator according to one of Claims 1 to 9, **characterized by** an average pore size of from 0.1 to 4 µm, preferably from 0.1 to 1 µm.

11. Separator according to one of Claims 1 to 10, **characterized by** a thickness of not more than 40 µm, preferably not more than 30 µm.

## Revendications

1. Séparateur destiné à être disposé dans une pile/batterie, comprenant un corps de base (1), le corps de base (1) comportant un côté d'anode (2) servant à la mise en contact de l'anode d'une pile/batterie et un côté cathode (3) servant à la mise en contact de la cathode d'une pile/batterie, **caractérisé en ce que** le côté anode (2) possède une constance de matériau différente du côté cathode (3), le côté anode (2) se composant d'un premier matériau ou d'un premier mélange de matériaux et le côté cathode (3) d'un deuxième matériau ou d'un deuxième mélange de matériaux,
le premier matériau ou le premier mélange de matériaux et le deuxième matériau ou le deuxième mélange de matériaux possédant des matières de charge, au moins une partie des matières de charge du côté anode contenant de l'Al₂O₃ et au moins une partie des matières de charge du côté cathode du polyfluorure de vinylidène, **caractérisé en ce que** le corps de base (1) se compose d'une étoffe nappée.

2. Séparateur selon la revendication 1, **caractérisé en ce qu'**une couche d'arrêt (6) finement poreuse est formée sur le côté anode (2) et/ou le côté cathode (3) .

3. Séparateur selon la revendication 2, **caractérisé en ce que** la couche d'arrêt (6) finement poreuse est appliquée par stratification sur le corps de base.

4. Séparateur selon la revendication 1, **caractérisé en ce qu'**au moins une partie des matières de charge est réalisée sous la forme de particules (4, 4a) ayant une taille de particule moyenne de 0,2 à 10 µm, de préférence de 0,5 à 4 µm.

5. Séparateur selon l'une des revendications 1 à 4, **caractérisé en ce qu'**au moins une partie des matières de charge est réalisée sous la forme de substances gonflables et formées dans des électrolytes.

6. Séparateur selon l'une des revendications 1 à 5, **caractérisé en ce que** l'étoffe nappée est réalisée sous la forme d'une étoffe nappée mouillée qui est consolidée thermiquement et/ou calée par un liant.

7. Séparateur selon l'une des revendications 1 à 6, **caractérisé en ce que** l'étoffe nappée est fabriquée à partir de fibres dont le diamètre moyen est au maximum de 5 µm.

8. Séparateur selon l'une des revendications 1 à 7, **caractérisé en ce que** le point de fusion de l'étoffe nappée est supérieur à 100 °C.

9. Séparateur selon l'une des revendications 1 à 8, **caractérisé par** un rétreint maximal de 5 % à une température de 150 °C.

10. Séparateur selon l'une des revendications 1 à 9, **caractérisé par** une taille de pore moyenne de 0,1 à 4 µm, de préférence de 0,1 à 1 µm.

11. Séparateur selon l'une des revendications 1 à 10, **caractérisé par** une épaisseur maximale de 40 µm, de préférence maximale de 30 µm.
